# EUROPÄISCHE PATENTSCHRIFT

(11) **EP 2 735 074 B1**
(45) Veröffentlichungstag und Bekanntmachung des Hinweises auf die Patenterteilung: **07.08.2019**
(21) Anmeldenummer: 12728397.6
(22) Anmeldetag: 14.06.2012
(51) Int. Cl.: B60L 50/00, H02J 7/02, H02J 50/10, H02J 50/90, B60L 53/20, B60L 53/12, B60L 53/38, B60L 53/34, B60L 53/30, B60L 3/04

(54) **VORRICHTUNG ZUM ÜBERTRAGEN VON ENERGIE AN EIN ELEKTROFAHRZEUG UND KRAFTWAGEN**
DEVICE FOR TRANSMITTING ENERGY TO AN ELECTRIC VEHICLE AND MOTOR VEHICLE
DISPOSITIF DE TRANSFERT D'ÉNERGIE VERS UN VÉHICULE ÉLECTRIQUE ET VÉHICULE AUTOMOBILE

(30) Priorität: 22.07.2011 DE 102011108386
(43) Veröffentlichungstag der Anmeldung: 28.05.2014
(73) Patentinhaber: Audi AG, 85045 Ingolstadt (DE)
(72) Erfinder: ELIAS, Björn, 85120 Hepberg (DE); PEER, Reinhard, 85080 Gaimersheim (DE)
(74) Vertreter: Herbst, Matthias Heinz
(86) Internationale Anmeldenummer: PCT/EP2012/002530
(87) Internationale Veröffentlichungsnummer: WO 2013/013742

(56) Entgegenhaltungen:
- EP-A2- 0 788 212
- WO-A1-2011/045883
- JP-A- 2010 246 348
- US-A1- 2005 002 145

## Beschreibung

Die Erfindung betrifft eine Vorrichtung zum Übertragen von Energie an ein Elektrofahrzeug.

Ein elektrisch betriebener Kraftwagen, hier auch als Elektrofahrzeug bezeichnet, kann zum Betreiben eines elektrischen Antriebsmotors einen als Traktionsbatterie bezeichneten Akkumulator zum Speichern von elektrischer Energie aufweisen. Eine Möglichkeit, die Traktionsbatterie eines Kraftwagens aufzuladen, besteht darin, sie an ein elektrisches Energie-Versorgungsnetz oder eine andere fahrzeugexterne Energiequelle anzuschließen. Falls die Traktionsbatterie fest in den Kraftwagen installiert ist, muss das Aufladen der Traktionsbatterie von einem Benutzer des Kraftwagens durchgeführt werden können. In der Regel handelt es sich bei dem Benutzer um eine technisch nicht in besonderer Weise ausgebildete Person. Aus diesem Grund ist man bestrebt, den Aufladevorgang möglichst sicher und bequem zu gestalten.

Aus der DE 42 36 286 A1 ist eine Anordnung zum automatischen, berührungslosen Laden einer Traktionsbatterie eines Elektrofahrzeugs bekannt. Eine Übertragung der Energie von der Anordnung zu dem Fahrzeug erfolgt über einen induktiven Übertrager. Die Anordnung weist hierzu eine Primärspule zum Erzeugen eines magnetischen Wechselfeldes auf, die an einem Ende eines versschwenkbaren Arms angeordnet ist. Zum Aufladen der Traktionsbatterie wird das Fahrzeug über der Anordnung geparkt und die Primärspule durch Verschwenken des Arms an eine Sekundärspule herangeführt, die sich im Fahrzeug befindet. Bei der Anordnung besteht das Problem, dass der Arm und die Primärspule beschädigt werden können, wenn das Fahrzeug bewegt wird, während der Arm ausgefahren ist.

In der JP 04236102 A ist eine Vorrichtung zum induktiven Aufladen einer Traktionsbatterie eines elektrisch betriebenen Kraftwagens beschrieben, bei welcher eine fest im Boden installierte Primärspule mit einer Sekundärspule des Kraftwagens dadurch magnetisch gekoppelt wird, dass ein weichmagnetischer Spulenkern der Sekundärspule vom Kraftwagen herab auf einen entsprechenden Spulenkern der Primärspule abgesenkt wird. Vor dem Absenken muss das Fahrzeug mittels einer automatischen Steuereinrichtung in eine geeignete Position manövriert werden, um die beiden Spulenkerne gegeneinander auszurichten. Ein weiteres Problem besteht bei der Vorrichtung darin, dass der Mechanismus zum Bewegen des Spulenkerns der Sekundärspule zu groß für eine Verwendung in einem Personenkraftwagen ist. In Bezug auf die Sicherheit ist es problematisch, dass der mechanisch bewegbare Spulenkern nahe an der Sekundärspule vorbeigeführt werden muss. Kommt es hierbei zu einer mechanischen Beeinträchtigung der elektrischen Isolierung der Spule, weil etwa der Spulenkern verschmutzt ist oder weil er nicht mehr richtig justiert ist und deshalb an der Isolierung reibt, kann es hierdurch zu einem Kurzschluss während des Aufladens oder zu einer Verletzung einer Person durch einen Stromschlag kommen.

Aus der WO 2011/045883 A1 ist ein Kraftwagen mit einem weichmagnetischen, absenkbaren Schwenkarm bekannt, über welchen eine Sekundärspule des Kraftwagens mit einer am Boden angeordneten Primärspule magnetisch gekoppelt werden kann.

Aus der EP 0 788 212 A2 ist ein induktives Aufladesystem für einen Kraftwagen bekannt, das eine bodenseitig anhebbare Induktionsspule aufweist.

In der JP 2010-246 348 A ist für eine Sekundärspule eines Aufladesystems eines Kraftwagens eine Bewegungseinheit beschrieben, bei welcher die Sekundärspule um eine exzentrisch gelagerte Scheibe gewickelt ist. Durch Drehen der exzentrisch gelagerten Scheibe um ihre Rotationsachse kann die Sekundärspule horizontal verlagert werden. Die Sekundärspule ist zudem in vertikaler Richtung verstellbar, indem eine spiralförmige Kulisse rotiert wird und hierdurch ein in die Kulisse eingreifender Haltering nach oben bzw. unten bewegt wird.

Aus der US 2005/002145 A1 kennt der Fachmann eine auf den Straßenbelag absenkbare Vorrichtung zur Ableitung elektrostatischer Ladungen von einem Kraftfahrzeug.

Es ist Aufgabe der vorliegenden Erfindung, eine sichere und einfach zu bedienende Vorrichtung zum Aufladen einer Traktionsbatterie eines elektrisch betriebenen Kraftwagens bereitzustellen.

Die Aufgabe wird durch eine Vorrichtung gemäß Patentanspruch 1 gelöst, mittels welcher Energie an ein Elektrofahrzeug übertragen werden kann.

Mittels des hier zur Veranschaulichung der Offenbarung beschriebenen Verfahrens lässt sich der Kraftwagen automatisch an eine fahrzeugexterne Energiequelle anschließen. Als Anschluss an die Energiequelle dient dabei eine Energie-Abgabeeinrichtung, die mit der Energiequelle, also z.B. einem elektrischen Versorgungsnetz, gekoppelt ist. Bei der Energie-Abgabeeinrichtung kann es sich beispielsweise um eine Buchse zum Einstecken eines fahrzeugseitigen Steckers handeln. Durch Einstecken des Steckers wird der Kraftwagen dann beispielsweise mit dem Energie-Versorgungsnetz galvanisch gekoppelt. Ein besonderer Aspekt der Erfindung besteht darin, dass sich die Energie-Abgabeeinrichtung am Boden eines Abstellplatzes für den Kraftwagen befindet. Während der Dauer des Aufladevorgangs befindet sie sich damit stets unterhalb des Kraftwagens, so dass ein Benutzer des Kraftwagens die Energie-Abgabeeinrichtung nicht versehentlich berühren oder beschädigen kann.

Gemäß dem Verfahren wird der Kraftwagen zum Aufladen seiner Traktionsbatterie über der (am Boden befindlichen) Energie-Abgabeeinrichtung abgestellt. In einem nächsten Schritt wird die Energie-Abgabeeinrichtung bezüglich einer Energie-Aufnahmeeinrichtung des Kraftwagens ausgerichtet. Für den Fall, dass es sich bei der Energie-Abgabeeinrichtung um eine Buchse handelt, kann die entsprechende Energie-Aufnahmeeinrichtung beispielsweise ein Stecker sein, der sich unterhalb eines Bodenblechs des Kraftwagens befindet. Zum Ausrichten der Energie-Abgabeeinrichtung wird diese solange unterhalb des Kraftwagens bewegt, bis sie eine günstige Position für das Koppeln der beiden Einrichtung hat.

Das Ausrichten der Energie-Abgabeeinrichtung geschieht nach dem Verfahren allerdings nur in einer Ebene parallel zu einem Boden des Kraftwagens. Mit anderen Worten wird die Energie-Abgabeeinrichtung, d.h. also z.B. die Buchse, nicht näher an den Boden des Kraftwagens herangeführt. Somit ist in vorteilhafter Weise sichergestellt, dass die (bodenseitige) Energie-Abgabeeinrichtung nicht beschädigt wird, wenn der Kraftwagen während des Ausrichtens oder danach losfährt.

In einem weiteren Schritt des Verfahrens wird seitens des Kraftwagens dessen Energie-Aufnahmeeinrichtung vom Boden des Kraftwagens zur Energie-Abgabeeinrichtung abgesenkt. Sollte der Kraftwagen hierbei oder danach (mit abgesenkter Energie-Aufnahmeeinrichtung) bewegt werden, so kann es zwar zu einer Beschädigung der Energie-Aufnahmeeinrichtung dieses einen Kraftwagens kommen. Die bodenseitige Energie-Abgabeeinrichtung bleibt aber funktionstüchtig. Bevorzugt wird mit Beginn des Absenkens der Energie-Aufnahmeeinrichtung ein Antriebsmotor des Kraftwagens deaktiviert, so dass der Benutzer des Kraftwagens bei abgesenkter Energie-Aufnahmeeinrichtung nicht losfahren und hierdurch die Energie-Aufnahmeeinrichtung beschädigen kann.

Nach dem Absenken der Energie-Abgabeeinrichtung wird diese mit der Energie-Aufnahmeeinrichtung gekoppelt und die Energie für die Traktionsbatterie über die gekoppelten Einrichtungen in den Kraftwagen übertragen.

Anstelle einer Energie-Abgabeeinrichtung, welche den Kraftwagen mit der Energiequelle galvanisch koppelt, wie es etwa bei der beschriebenen Buchse der Fall wäre, kann die Energie-Abgabeeinrichtung auch eine Anordnung aus Kondensatorplatten umfassen, durch welche eine kapazitive Kopplung eines Auflade-Schaltkreises des Kraftwagens mit dem Versorgungsnetz ermöglicht wird. Als dritte und bevorzugte Möglichkeit wird eine Energie-Abgabeeinrichtung bereitgestellt, die eine Primärspule zum Erzeugen eines magnetischen Wechselfelds umfasst. Durch die Energie-Abgabeeinrichtung ist dann eine induktive Übertragung der Energie ermöglicht, die sich als besonders sicher erwiesen hat.

Zu der Erfindung gehört eine Vorrichtung zum Übertragen von Energie an ein Elektrofahrzeug entsprechend Anspruch 1. Bei dieser Übertragungsvorrichtung ist auf einem Boden eines Abstellplatzes, auf dem das Elektrofahrzeug abgestellt werden kann, eine erste Drehscheibe angeordnet. Diese erste Drehscheibe ist mittels einer ersten Antriebseinrichtung um eine erste Drehachse drehbar. Auf der ersten Drehscheibe ist eine Verfahreinrichtung angeordnet, auf welcher wiederum eine Abgabeeinrichtung zum Abgeben der Energie für das Elektrofahrzeug angeordnet ist. Mittels der Verfahreinrichtung kann die Abgabeeinrichtung auf der ersten Drehscheibe bewegt werden. Hierdurch ist ein radialer Abstand der Abgabeeinrichtung bezüglich der ersten Drehachse der ersten Drehscheibe veränderbar.

Die Vorrichtung kann im Zusammenhang mit dem Verfahren oder aber auch unabhängig von diesem verwendet werden. Sie weist mehrere Vorteile auf, die sich sowohl bei ihrer Benutzung im Rahmen des beschriebenen Verfahrens als auch durch eine anderweitige Nutzung realisieren lassen. Die Vorrichtung lässt sich sehr flach ausbilden, so dass das Elektrofahrzeug problemlos über sie hinweggerollt werden kann, um es auf dem Abstellplatz parken zu können. Um die Position der Energie-Abgabeeinrichtung der Vorrichtung für den Aufladevorgang einzustellen, kann die Energie-Abgabeeinrichtung durch Drehen der ersten Drehscheibe auf einer Kreisbahn um die erste Drehachse bewegt werden.

Ein weiterer Vorteil der Vorrichtung besteht darin, dass sie sich auch während eines Betriebs unter einer vollständig geschlossenen Schutzabdeckung verbergen lässt, wodurch dann keine Gefahr besteht, dass ein Reifen eines Kraftwagens oder ein Fuß einer Person eingeklemmt oder dass das Innere der Vorrichtung verschmutzt wird.

Aber auch ohne eine besondere Schutzabdeckung ist die Vorrichtung bereits sehr sicher. Die erste Drehscheibe wird um sich selbst rotiert, so dass durch das Verändern ihrer Drehlage ein eventuell unter der Drehscheibe befindlicher Hohlraum, in dem beispielsweise die Antriebseinrichtung der Drehscheibe untergebracht sein kann, nur zu einem geringen Teil freigegeben wird. Das Elektrofahrzeug kann somit jederzeit losfahren, ohne dass die Gefahr besteht, dass ein Reifen des Elektrofahrzeugs in den Hohlraum gerät. Bevorzugt weist die Drehscheibe eine kreisrunde Form auf, in deren Kreismittelpunkt sich die Drehachse befindet. Dann deckt die Drehscheibe den Hohlraum in jeder Drehlage in gleichem Maße ab.

Das radiale Ausrichten der Abgabeeinrichtung mittels der Verfahreinrichtung erfordert ebenfalls nicht, dass besonders aufwändige Schutzmaßnahmen ergriffen werden müssten, um einen beim Verfahren der Abgabeeinrichtung auf der ersten Drehscheibe frei werdenden Schacht oder ähnliches abzudecken. Die Verfahreinrichtung kann beispielsweise aus einer rotierbaren Spindel bestehen, die einen Schlitten bewegt, auf dem die Energie-Abgabeeinrichtung befestigt ist. Die Spindel und der Schlitten können dann in einem Schacht in der Drehscheibe angeordnet sein, der schmal genug ist, damit nicht ein Reifen des Kraftwagens oder ein Fuß einer Person hineinrutschen kann.

Bevorzugt wird die Abgabeeinrichtung nur auf der ersten Drehscheibe bewegt, sie wird also nicht von dieser abgehoben. Mit anderen Worten ist die Abgabeeinrichtung durch die Drehscheibe und die Verfahreinrichtung ausschließlich in einer Ebene parallel zum Boden bewegbar. Somit steht sie zu keiner Zeit so weit vom Boden ab, dass sie durch einen darüber rollenden Fahrzeugreifen beschädigt werden oder ein Hindernis für eine Person darstellen könnte.

Die Verfahreinrichtung ist bevorzugt vollständig innerhalb eines Außenumfangs der ersten Drehscheibe angeordnet. Dann lässt sich die erste Drehscheibe in einer Vertiefung im Boden anordnen, deren Wände sich so dicht an dem Rand der ersten Drehscheibe befinden, dass zwischen der Wand und der ersten Drehscheibe nur ein Spalt frei bleibt, der schmaler als ein Autoreifen ist. Hierdurch wird die Vorrichtung besonders sicher.

Die Verfahreinrichtung selbst umfasst bevorzugt ebenfalls eine Drehschreibe (also eine zweite Drehscheibe), auf welcher die Abgabeeinrichtung angeordnet ist und welche mittels einer zweiten Antriebseinrichtung um eine zweite Drehachse drehbar ist. Mit anderen Worten trägt bei dieser Ausführungsform die erste Drehscheibe die zweite Drehscheibe. Mittels der zweiten Drehscheibe lässt sich in vorteilhafter Weise vermeiden, dass beim Verfahren der Abgabeeinrichtung auf der ersten Drehscheibe ein Hohlraum unterhalb der Verfahreinrichtung, d.h. unterhalb der zweiten Drehscheibe, freigegeben wird. Bevorzugt ist ein Durchmesser der zweiten Drehscheibe größer als ein Radius der ersten Drehscheibe. Dann lässt sich die Abgabeeinrichtung an jedem Ort im Bereich der ersten Drehscheibe positionieren.

Bei einer am Boden angeordneten Vorrichtung zum Übertragen von Energie (wie der oben beschriebenen) sollte verhindert werden, dass diese beschädigt wird, wenn ein Reifen eines Fahrzeugs auf der Vorrichtung steht, während versucht wird, die Energie-Abgabeeinrichtung zu bewegen. In diesem Zusammenhang besteht eine vorteilhafte Weiterbildung der erfindungsgemäßen Vorrichtung darin, dass die erste Antriebseinrichtung für die erste Drehscheibe und/oder eine Antriebseinrichtung für die Verfahreinrichtung eine Antriebskraft von einem Antriebsmotor über einen Reibschluss auf ein anzutreibendes Element überträgt. Beispielsweise können hierfür im Falle der ersten Drehscheibe Rollen aus Gummi verwendet werden, die von dem ersten Antriebsmotor gedreht werden und mit ihrer Mantelfläche gegen die erste Drehscheibe drücken. Falls eine Drehbewegung der ersten Drehscheibe dann durch ein darauf stehendes Fahrzeug blockiert ist, rutscht die Mantelfläche der Gummirolle über die Auflagefläche an der ersten Drehscheibe hinweg, sobald die Haftreibung überwunden ist. Dies verhindert, dass etwas bricht oder der Antriebsmotor überhitzt wird.

Eine besonders sichere Abgabe von Energie an das Elektrofahrzeug ergibt sich, wenn die Abgabeeinrichtung eine Primärspule zum Erzeugen eines magnetischen Wechselfeldes umfasst. Hierdurch lässt sich die Energie nach dem Transformatorenprinzip, also durch Induktion, in eine Sekundärspule übertragen, die sich in dem Elektrofahrzeug befinden kann.

Im Bezug auf die Form der Abgabeeinrichtung ergibt sich ein Vorteil, wenn ein die Energie abgebendes Element derselben rotationssymmetrisch ausgebildet ist. Dies macht es besonders einfach, den Vorgang des Ausrichtens der Energie-Abgabeeinrichtung und einer Energie-Aufnahmeeinrichtung eines Kraftwagens zu automatisieren, da die Notwendigkeit entfällt, eine der beiden Einrichtungen um ihre eigene Achse drehen zu müssen, um die beiden Einrichtungen miteinander koppeln zu können.

Ein nicht gesondert beanspruchter und hier für die Veranschaulichung beschriebener Aspekt betrifft einen Kraftwagen mit einer Traktionsbatterie zum Speichern von elektrischer Energie für einen elektrischen Antriebsmotor des Kraftwagens. Der Kraftwagen weist eine zum Aufladen der Traktionsbatterie ausgebildete Aufladeeinrichtung auf. Diese umfasst eine Sekundärspule zum Umwandeln eines magnetischen Wechselfelds, das außerhalb des Kraftwagens erzeugt wird, wie es beispielsweise mittels einer Primärspule der oben beschriebenen Aufladevorrichtung möglich ist. Das magnetische Wechselfeld wird durch die Sekundärspule in eine Wechselspannung umgewandelt, die dann zum Aufladen der Traktionsbatterie mit elektrischer Energie nutzbar ist. Die Aufladeeinrichtung weist bei dem Kraftwagen des Weiteren eine verschwenkbare Leiteinrichtung auf, mittels welcher der Sekundärspule das magnetische Wechselfeld, ähnlich wie in der WO 2011/045883 A1 beschrieben, zuführbar ist. Die Leiteinrichtung umfasst mit anderen Worten ein magnetisch hochpermeables Material, welches es ermöglicht, das Wechselfeld zu führen. Beispielsweise kann die Leiteinrichtung hierzu einen Stab aus einem weichmagnetischen Material umfassen.

Der Kraftwagen lässt sich vorteilhaft im Zusammenhang mit dem beschriebenen Verfahren verwenden. Er kann ebenso in Kombination mit der beschriebenen Aufladevorrichtung eingesetzt werden. Es ist aber auch möglich, den Kraftwagen in Kombination mit einer anderen Aufladevorrichtung und im Rahmen eines anderen Aufladeverfahrens zu verwenden. Durch die Leiteinrichtung zum Leiten des magnetischen Feldes lässt sich die Sekundärspule des Kraftwagens mit einer Primärspule einer Auflageeinrichtung magnetisch koppeln und hierbei über die Leiteinrichtung ein magnetischer Fluss mit einer hohen Dichte leiten. Dies hat zur Folge, dass die magnetische Flussdichte in den Bereichen neben der Leiteinrichtung besonders klein ist, was die Induktion von Wirbelströmen in anderen Bereichen des Kraftwagens vermeiden hilft. Dies führt insgesamt zu einer Erhöhung des Wirkungsgrades der gekoppelten Spulen im Verhältnis zu solchen Spulen, zwischen denen sich lediglich ein Luftspalt anstelle eines magnetisch hochpermeablen Materials befindet. Zudem ergibt sich durch die Vermeidung des Luftspalts eine verringerte magnetische Flussdichte in dem Zwischenraum zwischen den Spulen. Die für die Induktion einer Spannung benötigte Durchtrittsfläche der Spulen kann deshalb sehr viel kleiner sein als bei Spulen, zwischen denen sich ein großer Luftspalt befindet. Insgesamt kann damit bei dem Kraftwagen eine besonders kleine und leichte Aufladeeinrichtung bereitgestellt werden.

Bei der Leiteinrichtung zum Führen des magnetischen Feldes handelt es sich (anders als bei aus dem Stand der Technik bekannten Lösungen) nicht um einen beweglich in der Sekundärspule gelagerten Spulenkern. Bei dem Kraftwagen sind die Sekundärspule und ein diese zumindest teilweise umgebender, weichmagnetischer Spulenkern vielmehr bevorzugt fest in dem Kraftwagen gelagert. Hierdurch kann in vorteilhafter Weise das Risiko einer Beschädigung von spannungsführenden Teilen der Sekundärspule vermieden werden.

Die Leiteinrichtung kann stattdessen beispielsweise als verschwenkbarer Arm unterhalb der Sekundärspule am Kraftfahrzeugboden angebracht sein. Eine solche Vorrichtung weist den Vorteil auf, dass sie besonders klein und leicht ausgestaltet sein kann und sich deshalb beispielsweise auch in einem Personenkraftwagen unterbringen lässt, ohne dass hierzu beispielsweise der Freiraum im Inneren der Fahrzeugkabine verengt werden müsste.

Die Leiteinrichtung sollte zwei magnetisch gegeneinander isolierte Körper umfassen, die jeweils aus einem magnetisch hochpermeablen Material gebildet sind. Im Zusammenhang mit der Erfindung wird unter einem magnetisch hochpermeablen Material ein solches verstanden, dessen Permeabilitätszahl für die magnetische Leitfähigkeit (magnetische Permeabilität) größer als 100 ist. Durch die beiden Körper lässt sich das magnetische Wechselfeld dann in einem geschlossenen magnetischen Kreis von der Primärspule über die Leiteinrichtung zur Sekundärspule hin und wieder von dieser zurück führen, also nahezu ausschließlich durch magnetisch hochpermeables Material. Einer der Körper dient dabei als Leitelement hin zur Sekundärspule, der andere leitet das magnetische Feld von der Sekundärspule zurück zur Primärspule. Eine magnetische Isolierung zwischen den beiden Körpern kann mittels eines Materials bewirkt werden, das eine besonders kleine magnetische Leitfähigkeit aufweist, also z.B. Luft oder ein nicht-magnetischer Kunststoff.

Im Zusammenhang mit einer induktiven Energieübertragung von einer Aufladevorrichtung zu einem Elektrofahrzeug wurde beobachtet, dass es zu einer statischen Aufladung des Fahrzeugs kommen kann. Diese kann zu hohen Berührungsspannungen an leitenden Teilen des Fahrzeugs führen. Die Leiteinrichtung umfasst deshalb bevorzugt ein elektrisch leitendes Rückleitelement, welches dazu ausgelegt ist, den Kraftwagen während des Aufladens der Traktionsbatterie galvanisch mit einer Umgebung des Kraftwagens zu koppeln. Dies verhindert wirkungsvoll ein statisches Aufladen des Kraftwagens.

Die Erfindung wird im Folgenden anhand von Ausführungsbeispielen näher erläutert. Dazu zeigt:
- Fig. 1: eine schematische Darstellung einer Aufladevorrichtung gemäß einer Ausführungsform der erfindungsgemäßen Vorrichtung zum Übertragen von Energie,
- Fig. 2: eine schematische Darstellung der Aufladevorrichtung von Fig. 1 im Querschnitt und
- Fig. 3: eine schematische Darstellung eines Personenkraftwagens.

Die Beispiele stellen bevorzugte Ausführungsformen der Erfindung dar.

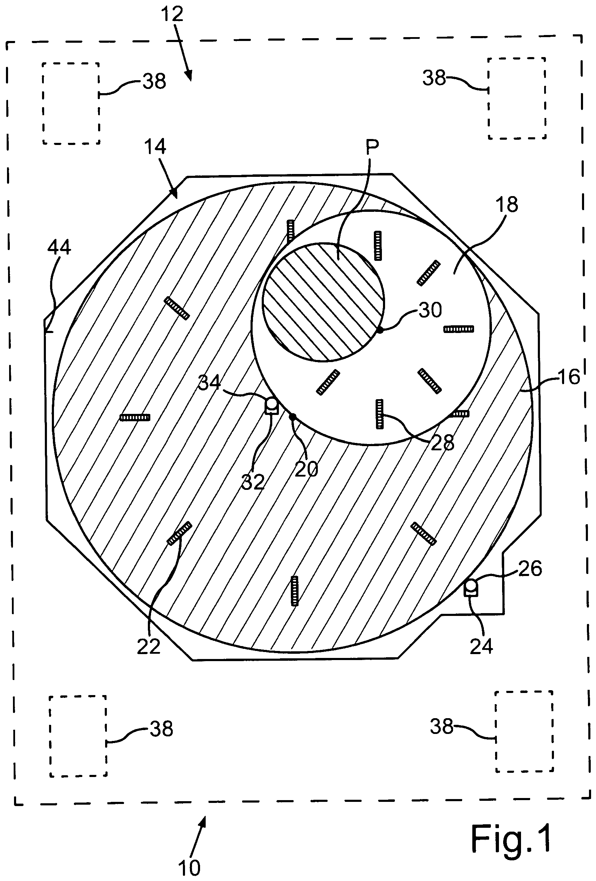

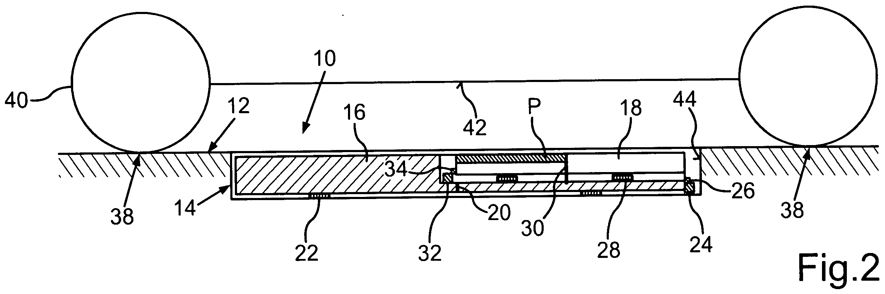

In dem in Fig. 1 und Fig. 2 veranschaulichten Beispiel soll eine Traktionsbatterie eines Personenkraftwagens aufgeladen werden. Dazu wird der Personenkraftwagen über einer Aufladestation 10 abgestellt. Die Aufladestation 10 weist im Bereich eines Abstellplatzes 12 für den Personenkraftwagen einen Schacht 14 auf. In dem Schacht 14 befindet sich eine kreisförmige Drehscheibe 16. Auf ihr ist eine weitere kreisförmige Drehscheibe 18 exzentrisch gelagert. Auf dieser wiederum ist eine als Primärspule P bezeichnete elektrische Spule exzentrisch bezüglich der Drehscheibe 18 angeordnet. Durch die Primärspule P lässt sich ein magnetisches Wechselfeld erzeugen, mittels welchem eine Spannung in einer Sekundärspule induziert werden kann, die sich in einer Aufladeeinrichtung für die Traktionsbatterie in dem Personenkraftwagen befindet. Über das Wechselfeld lässt sich Energie von der Aufladestation 10 in den Personenkraftwagen übertragen. Um die Primärspule P an die Sekundärspule heranzuführen, kann die Primärspule P durch Drehen der Drehscheibe 16 auf einer Kreisbahn um eine Drehachse 20 der Drehscheibe 16 bewegt werden. Durch Drehen der zweiten Drehscheibe 18 wird ein radialer Abstand der Primärspule P zur Drehachse 20 eingestellt.

Die Drehscheibe 16 ist auf Walzen 22 gelagert. Von den Walzen 22 ist in Fig. 1 und Fig. 2 der Übersichtlichkeit halber jeweils nur eine mit einem Bezugszeichen versehen. Zum Rotieren der Drehscheibe 16 weist die Aufladestation 10 einen von einem (nicht dargestellten) Steuergerät steuerbaren Antriebsmotor 24 auf. Auf einer Welle des Antriebsmotors 24 ist eine Rolle 26 aus einem elastischen Material, z.B. einem Gummi, befestigt. Die Rolle 26 drückt gegen einen Rand der Drehscheibe 16 und kann hierdurch eine Antriebskraft des Antriebsmotors 24 auf die Drehscheibe 16 übertragen.

Die kleinere Drehscheibe 18 ist auf Walzen 28 gelagert und auf diesen um eine Drehachse 30 von einem Antriebsmotor 32 rotierbar. Von den Walzen 28 ist in Fig. 1 und Fig. 2 der Übersichtlichkeit halber jeweils wieder nur eine mit einem Bezugszeichen versehen. Der Antriebsmotor 32 ist ebenfalls von dem Steuergerät steuerbar. Eine Kraft des Antriebsmotors 32 wird auf die Drehscheibe 18 über eine Rolle 34 übertragen, welche, ähnlich wie die Rolle 24, aus einem elastischen Material beschaffen ist.

Die Primärspule P weist eine rotationssymmetrische Forum auf und besteht aus mehreren Windungen eines elektrisch leitenden Drahtes. Sie kann auch einen weichmagnetischen Spulenkern umfassen, der die Windungen zu den Seiten hin und zum Boden des Schachtes 14 hin umgibt. Über (nicht dargestellte) elektrische Anschlüsse kann dem Draht der Primärspule P ein Wechselstrom eingeprägt werden. Die Primärspule P erzeugt dann in ihrer Umgebung das magnetische Wechselfeld.

Um das magnetische Wechselfeld mit einem möglichst hohen Wirkungsgrad zur Sekundärspule der Aufladevorrichtung übertragen zu können, muss die Primärspule P zunächst in eine bestimmte Position in Bezug auf die Sekundärspule gebracht werden. Dies wird durch das Steuergerät, wie folgt beschrieben, automatisch durchgeführt. Dazu ist in Fig. 1 die Lage von Auflageflächen 38 von Reifen 40 des Personenkraftwagens auf dem Abstellplatz 12 angedeutet.

Die Sekundärspule der Aufladevorrichtung befindet sich an einem Boden 42 des Personenkraftwagens. Zum Ausrichten der Primärspule P bezüglich der Sekundärspule erzeugt das Steuergerät Signale, durch welche die Antriebsmotoren 24 und 32 aktiviert werden. Hierdurch werden die Drehscheiben 16 und 18 in der beschriebenen Weise gedreht. Während des Verfahrens der Primärspule P erzeugt diese ein schwaches magnetisches Wechselfeld. Auf Grundlage eines Optimierungsalgorithmus verändert das Steuergerät die Position der Primärspule P solange, bis ein von der Aufladevorrichtung des Personenkraftwagens ausgesendetes Signal einen maximalen Wirkungsgrad der Übertragung von magnetischer Energie von der Primärspule P zur Sekundärspule anzeigt.

Bei der Aufladestation 10 wird die Primärspule P nur horizontal bewegt. Es ist daher jederzeit möglich, mit dem Personenkraftwagen über die Aufladestation 10 und insbesondere über die Drehscheiben 16 und 18 sowie die Primärspule P hinweg zu rollen, ohne dass Komponenten der Aufladestation 10 dabei beschädigt werden könnten. Umgekehrt steht zu keinem Zeitpunkt eine Komponente der Aufladestation 10 soweit aus dem Schacht 14 heraus, dass einer der Reifen 40 oder ein anderes Teil des Personenkraftwagens beschädigt werden könnten. Zudem sind Abstände zwischen einer Wand 44 des Schachtes 14 und den Drehscheiben 16 und 18 unabhängig von der Drehlage der Drehscheiben 16, 18 zu keinem Zeitpunkt so groß, dass einer der Reifen 40 in den Schacht 14 rutschen könnte. Auch für eine Person ist es jederzeit sicher, über die Aufladestation 10 zu gehen, ohne dass sie mit einem Fuß in den Schacht 14 rutschen und sich den Fuß verstauchen könnte. Die Drehscheibe 16 kann auch in einem flachen Podest untergebracht sein, dass auf dem Boden des Abstellplatzes liegt. Dann ist es nicht nötig, einen Schacht wie den Schacht 14 vorzusehen. Das Podest kann flach genug ausgestaltet werden, um mit einem Fahrzeug darüber fahren zu können.

Für den Fall, dass einer der Reifen 40 auf einer der Drehscheiben 16, 18 steht und hierdurch eine Drehbewegung der Drehscheibe 16 bzw. beider Drehscheiben 16, 18 blockiert ist, kann dies nicht dazu führen, dass einer der Elektromotoren 24 oder 32 überlastet wird, wenn er durch das Steuergerät aktiviert wird. Die Anpresskraft, mit welcher die Rollen 26 und 34 gegen die jeweilige Drehscheibe 16, 18 pressen, ist derart bemessen, dass die Rollen 26 und 34 bei blockierter Drehscheibe über die Oberfläche des Scheibenrandes rutschen. Für den Fall, dass eine größere Kraft auf die Drehscheiben übertragen werden soll, kann anstelle der Rollen 26, 34 aber auch vorgesehen sein, dass die Elektromotoren jeweils über ein Zahnrad oder eine Spindel mit der jeweiligen Drehscheibe gekoppelt sind.

Indem die Drehscheibe 16 auf mehreren Walzen 22 gelagert ist, liegt sie auf einer verhältnismäßig großen Fläche auf einem Boden des Schachts 14 auf. Es können daher auch sehr schwere Fahrzeuge, wie beispielsweise LKW, über die Aufladestation 10 rollen, ohne dass sich der Boden des Schachtes 14 mit der Zeit absenkt. Anstelle der Walzen 22 können auch Gleitlager, Rollen oder Ähnliches verwendet werden. Gleiches gilt auch für die Drehscheibe 18.

In dem in Fig. 1 und Fig. 2 veranschaulichten Beispiel entspricht der Durchmesser der Drehscheibe 18 dem Radius der Drehscheibe 16. Die Drehscheibe 18 kann auch einen größeren Durchmesser aufweisen. Dann lässt sich die Primärspule P auch über der Drehachse 20 positionieren.

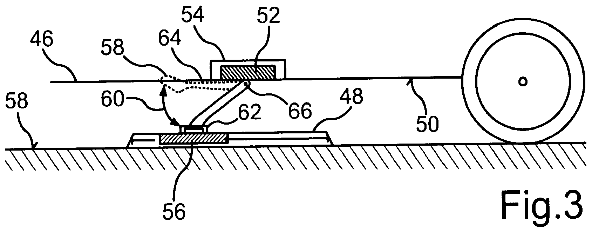

In Fig. 3 ist ein Personenkraftwagen 46 gezeigt, der über einer Aufladevorrichtung 48 geparkt ist. Bei der Aufladevorrichtung 48 kann es sich beispielsweise um die im Zusammenhang mit Fig. 1 und Fig. 2 beschriebene Aufladestation 10 handeln.

An einem Bodenblech 50 des Personenkraftwagens 46 befindet sich eine Spule 52, die in einen weichmagnetischen Spulenkern 54 eingebettet ist. Die Spule 52 und der Spulenkern 54 sind fest mit dem Bodenblech 50 verbunden. Bei der Spule 52 handelt es sich um eine Sekundärspule, in die mittels eines magnetischen Wechselfeldes eine Spannung zum Aufladen einer Traktionsbatterie des Personenkraftwagens 46 induziert werden kann.

In dem in Fig. 3 gezeigten Beispiel wird das magnetische Wechselfeld von einer Primärspule 56 der Aufladevorrichtung 48 erzeugt. Vor dem Aufladen wurde die Primärspule 56 über (in Fig. 3 nicht gezeigte) Antriebsmotoren horizontal, d.h. parallel zu einem Boden 58, auf welchem die Aufladevorrichtung 48 befestigt ist, in Bezug auf die Position der Sekundärspule 52 ausgerichtet.

Der Spulenkern 54 und ein Spulenkern der Primärspule 56 sind über einen Schwenkarm 58 magnetisch miteinander gekoppelt. In dem Schwenkarm 58 befinden sich zwei (nicht näher dargestellte) weichmagnetische Stäbe, die aus einem magnetisch hochpermeablen Material gefertigt sind. Die beiden Stäbe, der Spulenkern 54 und der Spulenkern der Primärspule 56 bilden einen geschlossenen magnetischen Kreis, über welchen das magnetische Wechselfeld der Primärspule 56 durch die Spule 54 geführt wird, ohne dass das sich ein Teil des geführten Wechselfeldes in einem Luftspalt mit einer den Wirkungsgrad signifikant beeinträchtigenden Breite befindet.

Beim Ausrichten der Primärspule 56 bezüglich der Spule 52 wurde durch das Steuergerät der Aufladevorrichtung 48 ein Schwenkweg 60 eines Endes 62 des Schwenkarms 58 berücksichtigt, der es erforderlich macht, dass die beiden Spulen 42, 56 nicht unmittelbar über einander, sondern versetzt zueinander ausgerichtet sein müssen, damit das Ende 62 die Primärspule 56 nach dem Absenken des Schwenkarms 58 berührt und ein maximaler Wirkungsgrad bei der Übertragung des magnetischen Wechselfeldes erreicht wird.

Die Primärspule 56 und das Ende 62 des Schwenkarms 58 sind jeweils rotationssymmetrisch ausgestaltet. Aus diesem Grund ergibt sich auch dann eine gute magnetische Kopplung zwischen dem Ende 62 und der Primärspule 56, wenn der Personenkraftwagen 46 schräg über der Aufladevorrichtung 48 geparkt ist. Die Form des Schwenkarms 58 und des Endes 62 können standardisiert sein. Der Formen-Typ kann dann beispielsweise von den Steuergerät beim Ausrichten der Primärspule 56 berücksichtigt werden.

In dem Schwenkarm 58 befindet sich auch eine elektrische Leitvorrichtung, über welche der Personenkraftwagen 56 während des Aufladens mit einem Erdungskabel der Aufladeeinrichtung 48 gekoppelt ist. Das Bodenblech 50 und andere metallische Teile des Personenkraftwagens 46 können sich dadurch während der Energieübertragung nicht statisch aufladen.

Während einer Fahrt des Personenkraftwagens 46 ist der Schwenkarm 58 in eine Transportstellung 64 gebracht. Das Ende 62 des Schwenkarms 58 wird dazu an einem Scharnier 66, an welchem der Schwenkarm 58 schwenkbar gelagert ist, mittels einer Antriebseinrichtung entlang des Schwenkwegs 60 zu einem Heck des Personenkraftwagens 46 hin bewegt. Eine Lage des Schwenkarms 58 in der Transportstellung 66 ist in Fig. 3 gestrichelt dargestellt. In dem der Schwenkarm 58 zum Heck hin zu bewegen ist, entsteht kein Schaden an dem Personenkraftwagen, wenn ein Fahrer den Personenkraftwagen 46 versehentlich vorwärt fährt, während der Schwenkarm 58 sich noch nicht in der Transportstellung 64 befindet.

Es ist auch denkbar, dass der Schwenkarm 58 während einer Fahrt des Personenkraftwagens 46 abgesenkt wird und über ihn Energie aus einer länglich geformten Primärspule empfangen wird. Straßen mit solchen Primärspulen, die ein Aufladen der Traktionsbatterie während einer Fahrt ermöglichen, werden auch als "elektrifizierte Straßen" bezeichnet.

Durch die Beispiele ist gezeigt, wie Energie mit einem hohen Wirkungsgrad von einer Aufladeeinrichtung zu einem Fahrzeug übertragen werden kann. Dazu muss nur eine verhältnismäßig leichte und kleine fahrzeugseitige Sekundärspule bereitgestellt sein. Die Aufladevorrichtung ist wegen einer geringen magnetischen Flussdichte im frei zugänglichen Bereich zwischen Fahrzeug und Aufladevorrichtung sicher. Eine statische Aufladung des Fahrzeugs ist ebenfalls vermieden.

## Patentansprüche

1. Vorrichtung (10) zum Übertragen von Energie an ein Elektrofahrzeug, umfassend:
- einen Abstellplatz (12) zum Abstellen des Elektrofahrzeugs und
- eine auf einem Boden des Abstellplatzes (12) angeordnete erste Drehscheibe (16), die mittels einer ersten Antriebseinrichtung (24) um eine erste Drehachse (20) drehbar ist,
**gekennzeichnet durch**
eine auf der ersten Drehscheibe (16) angeordnete Verfahreinrichtung (18), auf welcher eine Abgabeeinrichtung (P) zum Abgeben der Energie angeordnet ist und mittels welcher die Abgabeeinrichtung (P) auf der ersten Drehscheibe (16) verfahrbar ist.

2. Vorrichtung (10) nach Anspruch 1, bei welcher die Verfahreinrichtung (18) vollständig innerhalb eines Außenumfangs der ersten Drehscheibe (16) angeordnet ist.

3. Vorrichtung (10) nach Anspruch 1 oder 2, bei welcher die Verfahreinrichtung (18) eine zweite Drehscheibe (18) umfasst, auf welcher die Abgabeeinrichtung (P) angeordnet ist und welche mittels einer zweiten Antriebseinrichtung (32) um eine zweite Drehachse (30) drehbar ist, wobei ein Durchmesser der zweiten Drehscheibe (18) bevorzugt größer als ein Radius der ersten Drehscheibe (16) ist.

4. Vorrichtung (10) nach einem der vorhergehenden Ansprüche, bei welcher die Abgabeeinrichtung (P) durch die erste Drehscheibe (16) und die Verfahreinrichtung (18) ausschließlich in einer Ebene parallel zu dem Boden bewegbar ist.

5. Vorrichtung (10) nach einem der vorhergehenden Ansprüche, bei welcher die Antriebseinrichtung (24) für die erste Drehscheibe (16) und/oder eine Antriebseinrichtung (32) für die Verfahreinrichtung (18) eine Antriebskraft von einem Antriebsmotor (24, 32) über einen Reibschluss auf ein anzutreibendes Element (16, 18) übertragen wird.

6. Vorrichtung (10) nach einem der vorhergehenden Ansprüche, bei welcher die Abgabeeinrichtung (P) eine Primärspule (P) zum Erzeugen eines magnetischen Wechselfeldes umfasst.

7. Vorrichtung (10) nach einem der vorhergehenden Ansprüche, bei welcher ein die Energie abgebendes Element (P) der Abgabeeinrichtung (P) rotationssymmetrisch ausgebildet ist.

## Claims

1. Device (10) for transferring energy to an electric vehicle, comprising
- a parking space (12) for parking the electric vehicle and
- a first rotating disc (16) arranged on the base of the parking space (12) which is rotatable around a first rotational axis (20) by means of a first drive device (24),
**characterised by**
a traversing device (18) arranged on the first rotating disc (16), on which a dispensing device (P) for dispensing the energy is arranged and by means of which the dispensing device (P) is traversable on the first rotating disc (16).

2. Device (10) according to claim 1, in which the traversing device (18) is arranged completely within an outer perimeter of the first rotating disc (16).

3. Device (10) according to claim 1 or 2, in which the traversing device (18) comprises a second rotating disc (18) on which the dispensing device (P) is arranged and which is rotatable around a second rotational axis (30) by means of a second drive device (32), wherein a diameter of the second rotating disc (18) is preferably greater than a radius of the first rotating disc (16).

4. Device (10) according to any one of the preceding claims, in which the dispensing device (P) is moveable through the first rotating disc (16) and the traversing device (18) is moveable exclusively in a plane parallel to the base.

5. Device (10) according to any one of the preceding claims, in which the drive device (24) for the first rotating disc (16) and/or a drive device (32) for the traversing device (18) transfers a drive force from a drive motor (24, 32) via a frictional connection to an element (16, 18) to be driven.

6. Device (10) according to any one of the preceding claims, in which the dispensing device (P) comprises a primary coil (P) for generating an alternating magnetic field.

7. Device (10) according to any one of the preceding claims, in which an element (P) of the dispensing device (P) which dispenses the energy is formed to be rotationally symmetrical.

## Revendications

1. Dispositif (10) destiné à transmettre de l'énergie à un véhicule électrique, comprenant :
- une place de stationnement (12) pour stationner le véhicule électrique et
- un premier disque rotatif (16) agencé sur un sol de la place de stationnement (12) et pouvant tourner autour d'un premier axe de rotation (20) au moyen d'un premier dispositif de propulsion (24),
**caractérisé par**
un dispositif de positionnement (18), agencé sur le premier disque rotatif (16), sur lequel est agencé un dispositif de distribution (P) destiné à la distribution de l'énergie, et au moyen duquel le dispositif de distribution (P) peut être positionné sur le premier disque rotatif (16).

2. Dispositif (10) selon la revendication 1, dans lequel le dispositif de positionnement (18) est agencé en totalité à l'intérieur d'un périmètre extérieur du premier disque rotatif (16).

3. Dispositif (10) selon la revendication 1 ou 2, dans lequel le dispositif de positionnement (18) comprend un second disque rotatif (18) sur lequel est agencé le dispositif de distribution (P) et qui peut être entraîné en rotation autour d'un second axe de rotation (30) au moyen d'un second dispositif de propulsion (32), dans lequel un diamètre du second disque rotatif (18) est de manière préférée supérieur à un rayon du premier disque rotatif (16).

4. Dispositif (10) selon l'une quelconque des revendications précédentes, dans lequel le dispositif de distribution (P) peut être déplacé exclusivement dans un plan parallèle au sol grâce au premier disque rotatif (16) et au dispositif de positionnement (18).

5. Dispositif (10) selon l'une quelconque des revendications précédentes, dans lequel le dispositif de propulsion (24) pour le premier disque rotatif (16) et/ou un dispositif de propulsion (32) pour le dispositif de positionnement (18) va transmettre par friction à un élément à entraîner (16, 18) une force motrice exercée par un moteur d'entraînement (24, 32).

6. Dispositif (10) selon l'une quelconque des revendications précédentes, dans lequel le dispositif de distribution (P) comprend une bobine primaire (P) destinée à générer un champ magnétique alternatif.

7. Dispositif (10) selon l'une quelconque des revendications précédentes, dans lequel un élément distributeur d'énergie (P) du dispositif de distribution (P) est réalisé de manière à présenter une symétrie de révolution.
